Europäisches Patentamt

European Patent Office

Office européen des brevets

(19)

(11) Veröffentlichungsnummer: **0 031 052**
**A1**

(12) # EUROPÄISCHE PATENTANMELDUNG

(21) Anmeldenummer: **80107465.9**

(22) Anmeldetag: **28.11.80**

(51) Int. Cl.³: **F 16 J 1/00**
**B 01 L 3/02**

(30) Priorität: **21.12.79 DE 2951855**

(43) Veröffentlichungstag der Anmeldung:
**01.07.81 Patentblatt 81/26**

(84) Benannte Vertragsstaaten:
**BE FR GB NL**

(71) Anmelder: **SIEMENS AKTIENGESELLSCHAFT Berlin
und München**
**Postfach 22 02 61**
**D-8000 München 22(DE)**

(72) Erfinder: **Heyneman, Guido**
**8-Meilaan 48**
**B-8300 Knokke(BE)**

(54) **Zylinderdichtung.**

(57) Zur Abdichtung eines zylinderförmigen Teiles (1) aus Teflon ist an einer seiner Stirnseiten eine Ringnut (2) so eingedreht, daß der stehengebliebene Außenrand (3) elastisch verformbar ist. In diese Ringnut (2) ist ein O-Ring (4) aus elastischem Material eingedrückt, dessen Durchmesser größer als die Breite der Ringnut (2) ist.

EP 0 031 052 A1

./...

SIEMENS AKTIENGESELLSCHAFT          Unser Zeichen
Berlin und München                  VPA
                                    73 P 7909

Zylinderdichtung

Die Erfindung bezieht sich auf eine Dichtung zur Abdichtung eines zylinderförmigen Teiles aus Teflon gegen die hohlzylindrische Innenwandung eines Gefäßes oder dgl.

Teflon wird insbesondere in der chemischen Industrie wegen seiner ausgezeichneten chemischen Beständigkeit verwendet. Es wird beispielsweise als Material für die Kolben von Kolbenbüretten, für Verschlüsse von Glaszylindern oder anderen Gefäßen mit großem Erfolg verwendet. Teflon hat jedoch den Nachteil, daß es bei Unterschreiten einer Temperatur von etwa 18° C um etwa 1,2 Volumsprozent schwindet. Tritt ein Materialschwund auf, so liegen insbesondere zylinderförmige Teile nicht mehr dicht genug an der hohlzylinderischen Innenwandung eines Gefäßes oder dgl. an.

Der Erfindung liegt die Aufgabe zugrunde, eine Dichtung zur Abdichtung eines zylinderförmigen Teiles aus Teflon gegen die hohlzylindrische Innenwandung eines Gefäßes oder dgl. zu schaffen, die gegen Temperaturschwankungen der eingangs beschriebenen Art unempfindlich ist, so daß eine dauerhafte Dichtung gewährleistet ist. Die erfindungsgemäße Dichtung ist dadurch gekennzeichnet, daß zumindest an einer Stirnseite des zylinderförmigen Teiles eine Ringnut so eingearbeitet ist, daß der stehengebliebene hohlzylindrische Außenrand elastisch verformbar ist, und daß in diese Ringnut ein zylindrischer Ring aus elastischem Material eingedrückt ist, dessen Durchmesser größer ist als die Differenz zwischen Außen- und Innen-

Hs 1 Kow / 19.12.1979

durchmesser der Ringnut. Der elastische zylindrische Ring gleicht also die bei Temperaturschwankungen um den kritischen Temperaturpunkt auftretende Volumsverkleinerung aus. Ebenso werden Materialermüdungen ausgeglichen.

Vorzugsweise entspricht die Tiefe der Ringnut mindestens dem Durchmesser des zylindrischen Ringes. Hierbei ist es vorteilhaft, daß die Ringnut bzw. der zylindrische Ring durch einen auf einem zylindrischen Ansatz des zylinderförmigen Teiles aufgeschobenen hohlzylindrischen Teil verschlossen bzw. gesichert ist. Dieser hohlzylindrische Teil wird ebenso wie der zylindrische Ring aus chemisch beständigem Material gefertigt, beispielsweise aus PVC.

Vorzugsweise ist der Nenn-Außendurchmesser des hohlzylindrischen Teiles gleich dem Nenn-Außendurchmesser des zylinderförmigen Teiles, so daß eine geschlossene Baueinheit entsteht. Eine solche Ausführung ist insbesondere auch dann zweckmäßig, wenn der zylinderförmige Teil den Kolben einer Kolbenbürette bildet. In diesem Falle ist es auch zweckmäßig, daß die Ringnut an der antriebsseitigen Stirnseite des Kolbens eingedreht ist.

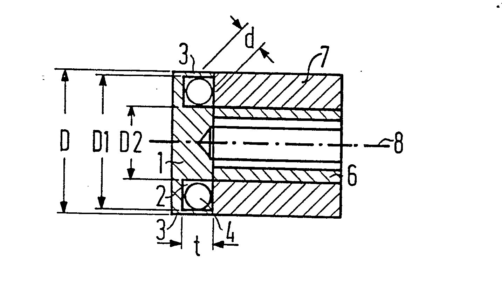

Anhand der Zeichnung, in der ein Ausführungsbeispiel dargestellt ist, wird die Erfindung näher erläutert. Die Zeichnung zeigt einen Schnitt durch den Kolben einer Kolbenbürette. Mit 1 ist ein zylinderförmiger Teil bezeichnet, der aus Teflon besteht. An der antriebsseitigen Stirnseite des zylinderförmigen Teiles 1 ist eine Ringnut 2 eingedreht und zwar so, daß der stehengebliebene hohlzylindrische Außenrand 3 elastisch verformbar ist, wenn in die Ringnut 2 ein zylindrischer Ring 4 aus elastischem Material eingedrückt ist. Der hohlzylindrische Außenrand 3 kann eine Stärke von etwa 1/2 mm aufweisen. Zur Erzielung einer radialen Federung des zylindrischen Ringes 4 ist der Durchmesser d etwas größer als die Differenz $D_1$ - $D_2$ zwischen Außen- und Innendurchmesser der Ringnut 2. Die Tiefe t der Ringnut 2 entspricht mindestens dem Durchmesser d des zylindrischen Ringes 4.

Wie zu ersehen ist, ist die Ringnut 2 an der der Flüssigkeit abgewandten Stirnseite des zylindrischen Teiles 1 des Kolbens vorgesehen. Im Prinzip kann die Ringnut 2 auch an der Flüssigkeitsseite des zylindrischen Teiles vorgesehen sein, dann muß aber die chemische Beständigkeit des Ringes beobachtet werden.

Der zylinderförmige Teil 1 besitzt einen zylindrischen Ansatz 6, auf dem ein hohlzylindrischer Teil 7 aufgeschoben ist, der den zylindrischen Ring 4 verschließt bzw. sichert. Der hohlzylindrische Teil 7 ist ebenfalls aus einem Material gefertigt, das chemisch beständig ist.

Der zylindrische Ansatz 6 weist ferner noch eine Gewindebohrung 8 auf zum Befestigen einer in der Zeichnung nicht dargestellten Kolbenstange.

Sofern der zylindrische Teil 1 nur zum Verschließen eines hohlzylindrischen Glaskörpers oder dgl. dient, kann der zylindrische Ansatz 6 erheblich kürzer gehalten werden. Auch ist eine Gewindebohrung 8 nicht erforderlich, es sei denn zum Herausziehen der Zylinderdichtung.

8 Patentansprüche
1 Figur

Patentansprüche

1. Dichtung zur Abdichtung eines zylinderförmigen Teiles aus Teflon gegen die hohlzylindrische Innenwandung eines Gefäßes oder dgl., d a d u r c h   g e k e n n - z e i c h n e t , daß zumindest an einer Stirnseite des zylinderförmigen Teiles (1) eine Ringnut (2) so eingearbeitet ist, daß der stehengebliebene hohlzylindrische Außenrand (3) elastisch verformbar ist, und daß in diese Ringnut (2) ein zylindrischer Ring (4) aus elastischem Material eingedrückt ist, dessen Durchmesser (d) größer ist als die Differenz $(D_1 - D_2)$ zwischen Außen- und Innendurchmesser der Ringnut (2).

2. Dichtung nach Anspruch 1, dadurch   g e k e n n - z e i c h n e t , daß die Tiefe (t) der Ringnut (2) mindestens dem Durchmesser (d) des zylindrischen Ringes (4) entspricht.

3. Dichtung nach Anspruch 1 oder 2, dadurch   g e k e n n- z e i c h n e t , daß die Ringnut (2) an der der abzudichtenden Seite abgewandten Stirnseite des zylinderförmigen Teiles (1) eingearbeitet ist.

4. Dichtung nach einem der Ansprüche 1 bis 3, dadurch g e k e n n z e i c h n e t , daß die Ringnut (2) bzw. der zylindrischen Ring (4) durch einen auf einen zylindrischen Ansatz (6) des zylindrischen Teiles (1) aufgeschobenen hohlzylindrischen Teil (7) verschlossen bzw. gesichert sind.

5. Dichtung nach Anspruch 4, dadurch   g e k e n n - z e i c h n e t , daß der Nenn-Außendurchmesser des hohlzylindrischen Teiles (7) gleich dem Nenn-Außendurchmesser (D) des zylinderförmigen Teiles (1) ist.

6. Dichtung nach Anspruch 4 oder 5, dadurch g e k e n n - z e i c h n e t , daß der Durchmesser des zylindrischen Ansatzes (6) des zylinderförmigen Teiles (1) gleich dem Innendurchmesser ($D_2$) der Ringnut (2) ist.

7. Dichtung nach einem der Ansprüche 1 bis 6, dadurch g e k e n n z e i c h n e t , daß der zylinderförmige Teil (1) Teil eines Kolbens einer Kolbenbürette ist.

8. Dichtung nach Anspruch 7, dadurch g e k e n n - z e i c h n e t , daß die Ringnut (2) an der antriebsseitigen Stirnseite des Kolbens eingedreht ist.

| Kategorie | EINSCHLÄGIGE DOKUMENTE Kennzeichnung des Dokuments mit Angabe, soweit erforderlich, der maßgeblichen Teile | betrifft Anspruch |
|---|---|---|
| | CH - A - 392 179 (MASCHINENFABRIK BURCKHARDT AG) <br> * Fig. 1 * <br> -- | 1 |
| | DE - A - 1 775 954 (IMPERIAL CHEMICAL INDUSTRIES LTD.) <br> * Anspruch 1; Fig. 5 * <br> -- | 1 |
| | DE - A - 2 061 802 (IMPERIAL CHEMICAL INDUSTRIES LTD.) <br> * Ansprüche 1, 5, 6; Fig. * <br> -- | 1 |
| | DE - A - 2 064 033 (CHEMPLAST, INC.) <br> * Seite 27, Zeile 12 bis Seite 28, Zeile 28; Fig. 13, 14 * <br> -- | 1 |
| | FR - A - 1 196 096 (STE DES GRANDS TRA-VAUX DE MARSEILLE et al.) <br> * Seite 1, Spalte 2, Zeile 20 bis Seite 2, Spalte 1, Zeile 3; Fig. 1, 2 * <br> ---- | 1 |

**KLASSIFIKATION DER ANMELDUNG (Int. Cl.³)**

F 16 J   1/00
B 01 L   3/02

**RECHERCHIERTE SACHGEBIETE (Int. Cl.³)**

B 01 L   3/00
F 16 J   1/00
F 16 J  15/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent-familie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 04-02-1981 | MASSALSKI |

EPA form 1503.1   06.78